# EUROPEAN PATENT SPECIFICATION

(11) **EP 1 812 666 B1**
(45) Date of publication and mention of the grant of the patent: **08.10.2014**
(21) Application number: 05797802.5
(22) Date of filing: 15.09.2005
(51) Int. Cl.: G07C 9/00, E04H 1/12, E05F 15/20, E04H 1/00, E04H 3/00, E06B 11/08

(54) **CONTAINERIZED ACCESS CONTROL UNIT**
IN EINEM CONTAINER BEFINDLICHE ZUGANGSSTEUEREINHEIT
UNITE DE COMMANDE D'ACCES EN CONTENEUR

(30) Priority: 19.11.2004 US 992126
(43) Date of publication of application: 01.08.2007
(73) Proprietor: Modular Security Systems, Inc., Ironton, Ohio 45638 (US)
(72) Inventor: RHETT SLAGEL, Robert, Ironton, OH 45638 (US)
(74) Representative: Beck Greener
(86) International application number: PCT/US2005/032970
(87) International publication number: WO 2006/055078

(56) References cited:
- CH-A5- 669 685
- DE-A1- 2 647 061
- NL-A- 9 301 809
- NL-C2- 1 020 261
- US-A- 3 482 037
- US-A- 4 627 193
- US-A- 5 727 352

## Description

The present invention relates to an access control unit comprising a portable container.

NL-A-9301809 provides a transportable structure, such as a container, having doorways in each of its ends. Within the container there is a detection arch. The structure is arranged in front of the access opening of an enclosed space so that anyone who wishes to enter the enclosed space has to walk through the container and, hence through the detection arch, which may include a metal detector or x-ray equipment.

CH-A-669685 describes an access control unit, comprising:
a portable container; and
at least one passing room disposed in the portable container allowing entry into a second, secured, area from a first area, having at least a first passing room opening, and at least a second passing room opening, and a walkway in-between, the at least one passing room comprising at least one barrier device located in the walkway and defining a first space between the first passing room opening and the barrier device, and a second space between the barrier device and the second passing room opening,
the access control unit further comprising a security device for controlling entry into the second, secured, area,
wherein the barrier device is arranged to be locked or closed to prevent a person's movement through the passing room, and hence to control access to the second, secured, area, and
wherein the barrier device remains locked or closed until caused to be unlocked by the security device so that a person can go through the barrier device and access the second area, and
wherein at least one control room, or at least one further passing room, is disposed in the portable container adjacent said passing room.

CH-A-669685 enables the entry of armed intruders into a security zone to be prevented.

According to the present invention an access control unit as defined above is characterised in that
the first passing room opening and the second passing room opening are in opposed walls of a single passing room with the barrier device located therebetween such that a person is prevented by the locked or closed barrier device from moving from the first area across the passing room into the second, secured area, in that
the security device is arranged to read an access device presented by a person in the first space, and when the access device has been successfully read, to authorise that person to enter the second secured, area and, when a person is so authorised, the barrier device is unlocked, and in that
the access control unit further comprises fencing attached or adjacent to the outside of the portable container to separate the second, secured, area from the first area.

There may be a plurality of passing rooms disposed adjacent to one another in the portable container. Additionally and/or alternatively, there may be a control room within the portable container. Each wall of the control room separating it from a passing room is preferably provided with a window.

Embodiments of the present invention will hereinafter be described, by way of example, with reference to the accompanying drawings, in which:
FIGURE 1 illustrates a front view of an access control unit of the invention,
FIGURE 2 shows a perspective view of the access control unit of FIGURE 1,
FIGURE 3 illustrates a top cross-sectional view of the access control unit of FIGURE 1,
FIGURE 4 is a detailed top cross-sectional view of a passing room and a control room of FIGURE 3, and
FIGURE 5 shows a perspective view of the passing room and the control room of FIGURE 4.

### The Containerized Access Control Unit

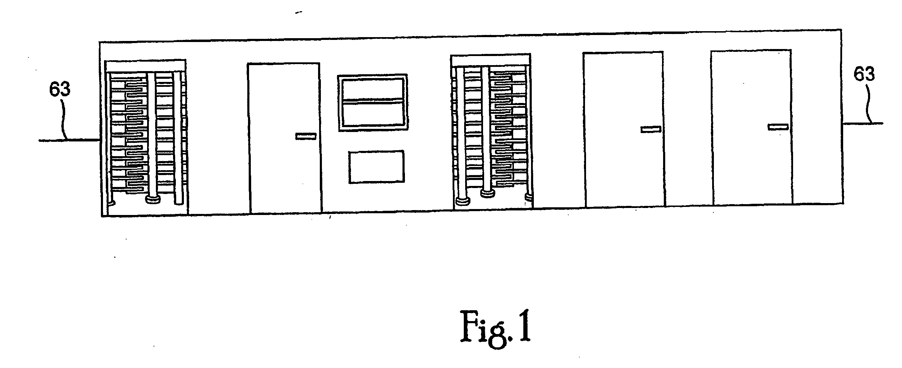

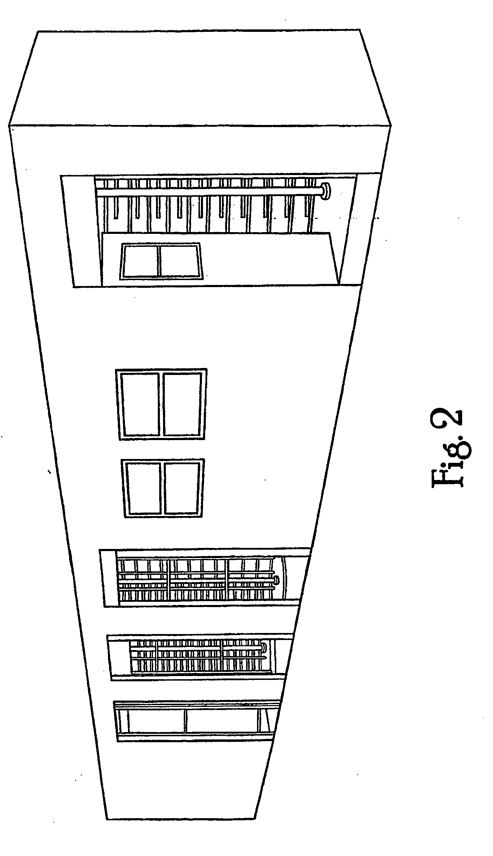

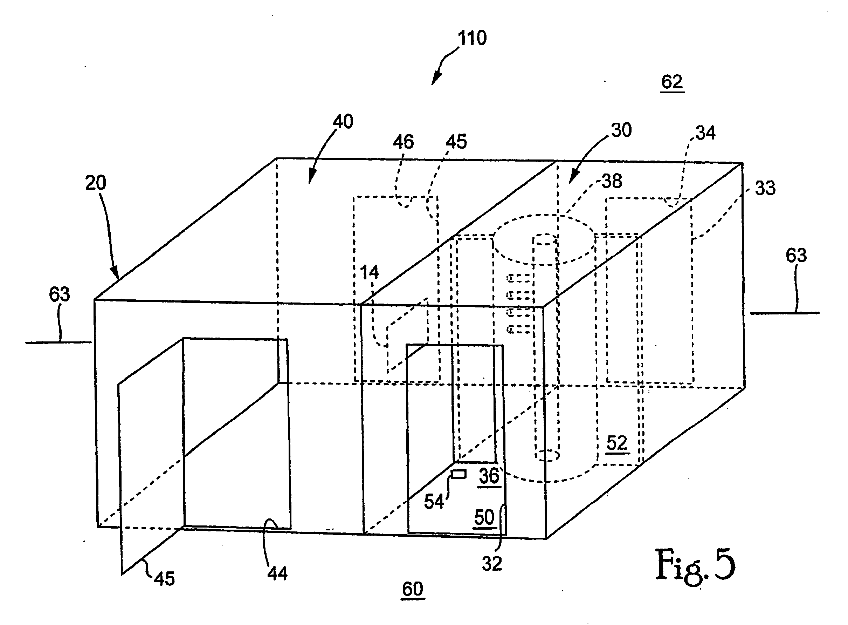

FIGURES 1 and 2 illustrate a front view and a perspective view of a portable container 110 of an access control unit. The portable container 110 has a housing 20, which, in the illustrated embodiment, is rectangular shaped. However, any other shape is also possible. The housing 20 may be made of a durable-material, for example, of iron, or stainless steel, enabling the portable container 110 to be securely towed by a vehicle. One or both ends of the portable container 110 can be equipped to be towed by a vehicle. In addition, a security system to ensure that only authorized vehicles move the portable container 110 can also be included. Furthermore, fencing 63 or other material may be attached to the portable container 110 to surround a secured area 62 as shown in FIGURE 5.

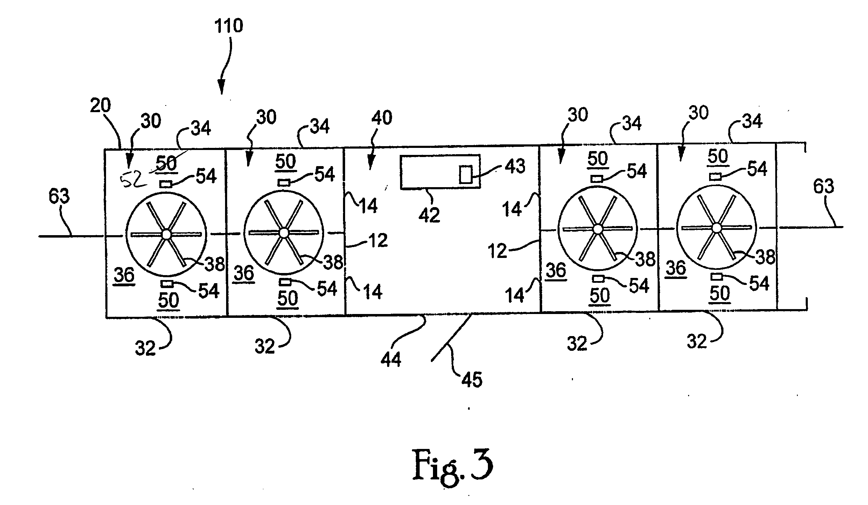

FIGURE 3 illustrates a top cross-sectional view of the portable container 110. In the portable container 110 at least one passing room 30 is disposed. The passing room 30 is provided for controlling and directing the movement of people between two areas. In addition, the portable container 110 may also comprise at least one control room 40 for housing a guard or supervisor.

The portable container 110 can be a standard shipping container. In one embodiment, the standard shipping container can be a shipping container which complies with international standards as determined by the International Organization for Standardization (ISO). In one embodiment, the shipping container can include the following features: made from corrugated steel; heavy steel framed to withstand repeated lifting and placing; able to hold a cargo as large as 30 tons; marine grade plywood flooring; lockable accessible doors on one or both sides of the shipping container; forklift pockets; corner connectors; or a venting system; or any combination thereof.

The portable container 110 may be delivered to a user in a ready- made or turn-key state. In this case, if electricity is not required, the portable container 110 is ready to be used. If electricity is required, all that needs to be done to render the portable container 110 usable is the provision of electricity. Alternatively, the portable container may be customizable by the user to meet specific needs of the user.

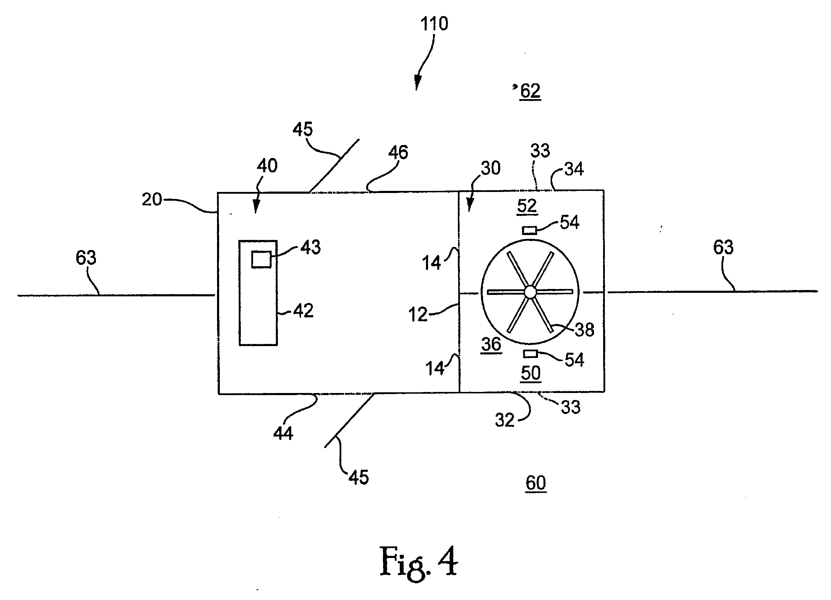

FIGURE 4 is a detailed top cross-sectional view of a passing room 30 and a control room 40 of an access control unit.

**Passing Room.** A passing room 30 controls the movement of people between a first area 60 and a second, secured area 62. A fence 63 is used to separate the areas 60 and 62 in locations where the portable container 110 is not used. The passing room 30 has at least a first opening 32, and at least a second opening 34, which is on a side opposite to the first opening 32. The second opening 34 is spaced apart from the first opening 32 so as to define a walkway 36 in-between. A closing device 33, for example, a door, or shutters, is employed to close the openings 32 and 34 when passing room 30 is not in use. A security sensing device for safeguarding the closing device 33 can be employed.

The portable container 110 comprises at least one barrier device 38 in the inside of the passing room 30 to prevent a person's movement through the passing room 30. A turnstile, for example, a full-body turnstile, a partial-body turnstile, a bidirectional turnstile, or a uni-directional turnstile may be employed as the barrier device of the passing room 30. Other barrier devices may also be used to restrict a person's movement through the passing room 30. For example, a sliding door, a revolving door, moving bars, and gates may be used as a barrier device. The barrier device 38 is located inside the walkway 36, defining a first space 50 between the barrier device 38 and the first opening 32, and defining a second space 52 between the barrier device 38 and the second opening 34.

The portable container 110 also includes at least one security device 54 issuing permission for a person to pass through the passing room 30. In one embodiment, the security device 54 can comprise, but is not limited to, one or more card readers, metal detectors, biometric readers, iris scanners, fingerprint or palm readers, explosive detectors, physical or facial recognition terminology, electronic key locks, or mechanical key locks, or any combination thereof. The security device 54 can also include a security measure, such as, but not limited to, posting an individual proximate to the barrier device 38 to check identification cards, for example, photo identification cards, or licenses. In one embodiment, a security device 54 is located in the first space 50 and also in the second space 52. Security devices 54 can be included inside or outside of the passing room 30.

The passing room 30 can also comprise lighting.

**Control Room.** In one embodiment, a control room 40 is provided for housing a guard or supervisor. The control room 40 can include a control panel 42 to control the barrier device(s) 38 and the security device(s) 54 in order for a guard or supervisor to monitor the passing room(s) while staying in the control room 40. The control panel 42 can comprise an alarm device 43 which gives an alarm in case a problem occurs in a passing room 30.

The control room 40 and an adjacent passing room 30 are separated by at least one wall 12. The wall 12 can include at least one window 14, so that a guard in the control room 40 can observe the inside of the passing room 30 or the outside of the portable container 110. The control room 40 has at least one opening 44 with at least one closing device 45. The closing device(s) 45 of the control room 40 can be the same as, or different from, the closing device(s) 33 of the passing room(s) 30.

The control room 40 can also comprise: heat and/or air-conditioning; lighting; at least one computer/cable outlet; at least one phone jack; at least one electrical outlet; at least one vent; or insulation; or any combination thereof.

FIGURE 5 illustrates a perspective view of a passing room 30 and an adjacent control room 40. As the portable container 110 has a housing 20 which comprises both the at least one passing room 30 and the at least one control room 40, it is easy for users to move and use almost anywhere. The portable container has everything that a user needs to control access to an area.

### Use of the Containerized Access Control Unit

The portable container 110 can be put on a vehicle or trailer and transported or towed to reach multiple destinations, and can be used to control access to an area. The portable container may be used by people who have an access device (e.g., people working on a construction site). The access device is read by the security device. The portable container 110 may also be used by people that do not have an access device, but who must pass through security to enter a venue (e.g., an outside concert).

**Use with Access Device.** If the portable container 110 is being used in conjunction with an access device, when a person approaches the passing room 30 from an area 60 and enters the first opening 32, the person can stay in the first space 50 in the walkway 36 and present an access device (e.g., identification or electronically read card) to the security device 54. In one embodiment, because the security device 54 is located inside the passing room, the chance that the person will lose or break an identification card or device is decreased because the person does not need to expose the identification card or device outside of the portable container 110. The portable container 110 also protects the security device 54, because the security device 54 is located inside of the passing room 30.

The barrier device remains locked or closed until the access device is successfully read by the security device 54. Once a person is approved by the security device 54, the barrier device 38 is unlocked and the person can go through the barrier device 38. If a person is not approved by the security device 54, the barrier device 38 continues to be kept locked, and, the control panel 42 can give an alarm to a guard via the alarm device 43.

**Use without Access Device.** If the portable container 110 is being used without an access device, when a person approaches the passing room 30 from an area 60 and enters the first opening 32, the person can stay in the first space 50 in the walkway 36 and go through the security device 54 (e.g., a metal detector). The barrier device 38 remains locked or closed until the security device 54 or security personnel authorizes a person to enter the secured area 62. Once a person is approved, the barrier device 38 is unlocked and the person can go through the barrier device 38. If a person is not approved, the barrier device 38 continues to be kept locked, and, the control panel 42 can give an alarm to a guard via the alarm device 43.

### Manufacturing of the Containerized Access Control Unit

In one embodiment, a standard shipping container is filled with material to be shipped at a first location. Then, the container is shipped to a second location. The container is next unloaded at the second location. Next, the container is outfitted as an access control unit after the container is unloaded. The second location can be overseas from the first embodiment.

It will be appreciated that modifications to, and variations of, the embodiments as described and illustrated may be made within the scope of this invention as defined by the accompanying claims.

## Claims

1. An access control unit, comprising:
a portable container (110); and
at least one passing room (30) disposed in the portable container allowing entry into a second, secured, area (62) from a first area (60), having at least a first passing room opening (32), and at least a second passing room opening (34), and a walkway (36) in-between, the at least one passing room comprising at least one barrier device (38) located in the walkway and defining a first space (50) between the first passing room opening (32) and the barrier device, and a second space (52) between the barrier device and the second passing room opening (34),
the access control unit further comprising a security device (54) for controlling entry into the second, secured, area (62),
wherein the barrier device (38) is arranged to be locked or closed to prevent a person's movement through the passing room, and hence to control access to the second, secured, area, and
wherein the barrier device (38) remains locked or closed until caused to be unlocked by the security device (54) so that a person can go through the barrier device and access the second area (62), and
wherein at least one control room (40), or at least one further passing room (30), is disposed in the portable container (110) adjacent said passing room (30),
the first passing room opening (32) and the second passing room opening (34) are in opposed walls of a single passing room (30), **characterised in that** the barrier device (38) located therebetween such that a person is prevented by the locked or closed barrier device (38) from moving from the first area (60) across the passing room into the second, secured area (62), **in that**
the security device (54) is arranged to read an access device presented by a person in the first space (50), and when the access device has been successfully read, to authorise that person to enter the second secured, area (62) and, when a person is so authorised, the barrier device (38) is unlocked, and **in that**
the access control unit further comprises fencing (63) attached or adjacent to the outside of the portable container (110) to separate the second, secured, area (62) from the first area (60).

2. An access control unit as claimed in Claim 1, having at least one control room (40), said control room (40) comprising at least one control panel (42) to control the at least one barrier device (38) to enable a guard or supervisor to monitor the at least one passing room while staying in the at least one control room (40).

3. An access control unit as claimed in Claim 2, wherein the control panel (42) comprises an alarm device (43) which gives an alarm in case a problem occurs in the at least one passing room (30).

4. An access control unit as claimed in Claim 2 or Claim 3, wherein the control room (40) is separated from one passing room (30) by a wall (12) and there is at least one window (14) disposed in the wall (12).

5. An access control unit as claimed in any preceding claim, wherein the portable container (110) is delivered in a turnkey state.

6. An access control unit as claimed in any of Claims 1 to 4, wherein a user may customize features of the portable container (110) to meet specific needs.

7. An access control unit as claimed in any preceding claim, wherein the at least one security device (54) includes one or more card readers, one or more metal detectors, one or more biometric readers, one or more iris scanners, one or more fingerprint readers, one or more facial recognition devices, one or more explosive detectors, one or more electronic key locks, or one or more mechanical key locks, or a combination of two or more thereof.

8. An access control unit as claimed in Claim 7, wherein the at least one security device (54) is located in the first space (50), in the second space (52) or in both.

9. An access control unit as claimed in any preceding claim, wherein the barrier device (38) comprises a turnstile, a sliding door, a revolving door, moving bars, or gates.

## Patentansprüche

1. Eine Zutrittskontrolleinheit, bestehend aus: einem
beweglichen Container (110); und
mindestens einem im Container angeordneten Durchgangsraum (30), der Zutritt zu einem zweiten, gesicherten Bereich (62) vom ersten Bereich (60) ermöglicht, welcher mindestens eine Durchgangsraumöffnung (32) und mindestens eine weitere Durchgangsraumöffnung (34) und einen Gehweg (36) dazwischen aufweist, der mindestens eine Durchgangsraum beinhaltet mindestens eine Schrankenvorrichtung (38), die im Gehweg eingebaut ist und einen ersten Raum (50) zwischen der ersten Durchgangsraumöffnung (32) und der Schrankenvorrichtung definiert, und einen zweiten Raum, (52) zwischen der Schrankenvorrichtung und dem zweiten Durchgangsraum,
die Zutrittskontrolleinheit umfasst weiterhin eine Sicherheitsvorrichtung (54) zur Kontrolle des Zutritts in den zweiten, abgesicherten Bereich (62),
wobei die Schrankenvorrichtung (38) so angeordnet ist, dass sie verriegelt oder geschlossen werden kann, um die Bewegung einer Person durch den Durchgangsraum zu verhindern und somit den Zutritt zum zweiten, abgesicherten Bereich kontrolliert, und
wobei die Schrankenvorrichtung (38) verriegelt oder geschlossen bleibt, bis sie durch die Sicherheitsvorrichtung (54) entriegelt wird, so dass eine Person durch die Schrankenvorrichtung gehen und den zweiten Raum (62) betreten kann, und
wobei mindestens ein Kontrollraum (40) oder mindestens ein weiterer Durchgangsraum (30) im beweglichen Container (110) angrenzend zu besagtem Durchgangsraum (30) angeordnet ist,
die erste Durchgangsraumöffnung (32) und die zweite Durchgangsraumöffnung (34) sind in gegenüberliegenden Wänden eines einzelnen Durchgangsraums (30), **dadurch gekennzeichnet, dass** eine Schrankenvorrichtung angebracht ist (38), so dass eine Person durch die verriegelte oder geschlossene Schrankenvorrichtung (38) an der Bewegung vom ersten Bereich (60) durch den Durchgangsraum in den zweiten, abgesicherten Bereich (62) gehindert wird, und dass
die Sicherheitsvorrichtung (34) so angeordnet ist, dass sie eine durch eine Person im ersten Raum (50) vorgezeigte Zugangsvorrichtung liest, und wenn die Zugangsvorrichtung erfolgreich gelesen wurde, diese Person zum Betreten des zweiten, gesicherten Bereichs (62) zu befugen, und wenn eine Person in dieser Weise befugt wird, wird die Schrankenvorrichtung (38) entriegelt, und dass
die Zugangskontrolleinheit weiterhin eine Umzäunung (63) umfasst, die an die Außenseite des beweglichen Containers (110) grenzt oder an ihr angebracht ist, um den zweiten, gesicherten Bereich (62) vom ersten Bereich (60) zu trennen.

2. Eine Zugangskontrolleinheit wie die in Anspruch 1 beanspruchte, die mindestens einen Kontrollraum (40) aufweist, und bei welcher besagter Kontrollraum (40) mindestens ein Kontrollpult (42) zur Kontrolle der mindestens einen Schrankenvorrichtung (38) umfasst, um einer Wache oder einem Aufseher die Beobachtung des mindestens einen Durchgangsraumes zu ermöglichen, während diese(r) in dem mindestens einen Kontrollraum (40) verbleibt.

3. Eine Zugangskontrolleinheit wie die in Anspruch 2 beanspruchte, wobei das Kontrollpult (42) eine Alarmvorrichtung (43) umfasst, die einen Alarm auslöst, falls ein Problem in dem mindestens einen Durchgangsraum auftritt.

4. Eine Zugangskontrolleinheit wie die in Anspruch 2 oder Anspruch 3 beanspruchte, wobei der Kontrollraum (40) von einem Durchgangsraum (30) durch eine Wand (12) getrennt ist und mindestens ein Fenster (14) in der Wand (12) eingebaut ist.

5. Eine Zugangskontrolleinheit wie die in jedem vorherigen Anspruch beanspruchte, wobei der bewegliche Container (110) in schlüsselfertigem Zustand geliefert wird.

6. Eine Zugangskontrolleinheit wie die in jedem der Ansprüche 1 bis 4 beanspruchte, wobei der Benutzer die Merkmale des beweglichen Containers (110) zur Befriedigung bestimmter Bedürfnisse anpassen kann.

7. Eine Zugangskontrolleinheit wie die in jedem vorherigen Anspruch beanspruchte, wobei die mindestens eine Sicherheitsvorrichtung (54) ein oder mehrere Lesegeräte, ein oder mehrere Biometrieleser, ein oder mehrere Irisabtaster, ein oder mehrere Fingerabdruckleser, ein oder mehrere Sprengstoffdetektoren, ein oder mehrere elektronische Schlösser, oder ein oder mehrere mechanische Schlösser, oder eine Kombination aus zwei oder mehr der genannten mit einschließt.

8. Eine Zugangskontrolleinheit wie die in Anspruch 7 beanspruchte, wobei sich mindestens eine Sicherheitsvorrichtung (54) im ersten Raum (50), im zweiten Raum (52) oder in beiden befindet.

9. Eine Zugangskontrolleinheit wie die in jedem vorherigen Anspruch beanspruchte, wobei die Schrankenvorrichtung (38) ein Drehkreuz, eine Schiebetür, eine Drehtür, bewegliche Balken oder Tore umfasst.

## Revendications

1. Une unité de contrôle d'accès, comprenant :
un conteneur portatif (110), et
au moins une salle de passage (30) disposée dans le conteneur portatif permettant l'entrée dans une deuxième zone sécurisée (62) à partir d'une première zone (60), possédant au moins une première ouverture de salle de passage (32) et au moins une deuxième ouverture de salle de passage (34), et une voie de passage (36) entre elles, la au moins une salle de passage comprenant au moins un dispositif à barrière (38) installé dans la voie de passage et définissant un premier espace (50) entre la première ouverture de salle de passage (32) et le dispositif à barrière, et un deuxième espace (52) entre le dispositif à barrière et la deuxième ouverture de salle de passage (34),
l'unité de contrôle d'accès comprenant en outre un dispositif de sécurité (54) destiné à contrôler l'entrée dans la deuxième zone sécurisée (62),
où le dispositif à barrière (38) est agencé de façon à être verrouillé ou fermé de façon à empêcher le déplacement d'une personne au travers de la salle de passage, et en conséquence de façon à contrôler l'accès à la deuxième zone sécurisée, et
où le dispositif à barrière (38) demeure verrouillé ou fermé jusqu'à ce qu'il soit amené à être déverrouillé par le dispositif de sécurité (54) de sorte qu'une personne puisse passer au-delà du dispositif à barrière et accéder à la deuxième zone (62), et
où au moins une salle de contrôle (40), ou au moins une autre salle de passage (30), est disposée dans le conteneur portatif (110) adjacente à ladite salle de passage (30),
la première ouverture de salle de passage (32) et la deuxième ouverture de salle de passage (34) se situent dans des parois opposées d'une seule salle de passage (30), **caractérisées en ce que** le dispositif à barrière (38) est installé entre elles de sorte qu'une personne soit empêchée par le dispositif à barrière verrouillé ou fermé (38) de se déplacer de la première zone (60) à travers la salle de passage vers la deuxième zone sécurisée (62), et **en ce que**
le dispositif de sécurité (54) est agencé de façon à lire un dispositif d'accès présenté par une personne dans le premier espace (50), et, lorsque le dispositif d'accès a été lu avec succès, de façon à autoriser cette personne à pénétrer dans la deuxième zone sécurisée (62) et, lorsqu'une personne est ainsi autorisée, le dispositif à barrière (38) est déverrouillé, et **en ce que**
l'unité de contrôle d'accès comprend en outre une clôture (63) fixée ou adjacente à l'extérieur du conteneur portatif (110) de façon à séparer la deuxième zone sécurisée (62) de la première zone (60).

2. Une unité de contrôle d'accès selon la Revendication 1, possédant au moins une salle de contrôle (40), ladite salle de contrôle (40) comprenant au moins un panneau de commande (42) destiné à commander le au moins un dispositif à barrière (38) de façon à permettre à un gardien ou un superviseur de surveiller la au moins une salle de passage tout en restant dans la au moins une salle de contrôle (40).

3. Une unité de contrôle d'accès selon la Revendication 2, où le panneau de commande (42) comprend un dispositif d'alarme (43) qui déclenche une alarme dans le cas où un problème se produit dans la au moins une salle de passage (30).

4. Une unité de contrôle d'accès selon la Revendication 2 ou 3, où la salle de contrôle (40) est séparée d'une salle de passage (30) par une paroi (12) et il y a au moins une fenêtre (14) disposée dans la paroi (12).

5. Une unité de contrôle d'accès selon l'une quelconque des Revendications précédentes, où le conteneur portatif (110) est livré dans un état clés en main.

6. Une unité de contrôle d'accès selon l'une quelconque des Revendications 1 à 4, où un utilisateur peut personnaliser des caractéristiques du conteneur portatif (110) de façon à répondre à des besoins spécifiques.

7. Une unité de contrôle d'accès selon l'une quelconque des Revendications précédentes, où le au moins un dispositif de sécurité (54) comprend un ou plusieurs lecteurs de cartes, un ou plusieurs détecteurs de métaux, un ou plusieurs lecteurs biométriques, un ou plusieurs lecteurs d'iris, un ou plusieurs lecteurs d'empreintes digitales, un ou plusieurs dispositifs de reconnaissance faciale, un ou plusieurs détecteurs d'explosifs, un ou plusieurs verrous de sécurité électroniques ou un ou plusieurs verrous de sécurité mécaniques, ou une combinaison de deux ou plus de ceux-ci.

8. Une unité de contrôle d'accès selon la Revendication 7, où le au moins un dispositif de sécurité (54) est installé dans le premier espace (50), dans le deuxième espace (52) ou dans les deux.

9. Une unité de contrôle d'accès selon l'une quelconque des Revendications précédentes, où le dispositif à barrière (38) comprend un tourniquet, une porte coulissante, une porte pivotante, des barres de déplacement ou des grilles.
